# FASCICULE DE BREVET EUROPEEN

(11) **EP 0 580 912 B1**
(45) Date de publication et mention de la délivrance du brevet: **29.10.1997**
(21) Numéro de dépôt: 92420259.1
(22) Date de dépôt: 31.07.1992
(51) Int. Cl.: C01B 13/32, C22B 19/34, C01G 9/03

(54) **Procédé de fabrication semi-conducteurs à base d'oxyde de zinc.**
Verfahren zur Herstellung von Halbleiter auf Basis von Zinkoxid
Process for making semi-conductors based on zinc oxide

(43) Date de publication de la demande: 02.02.1994
(73) Titulaire: FERRAZ Société Anonyme, F-69003 Lyon (FR)
(72) Inventeur: Marchand, Alain Rémy, F-69200 Venissieux (FR); Bucher, Olivier, F-70270 Melisey (FR); Delalu, Henri, F-69002 Lyon (FR); Marichy, Gérard, F-69110 Saint-Foy-Les-Lyon (FR); Counioux, Jean-Jacques, F-69003 Lyon (FR)
(74) Mandataire: Monnier, Guy

(56) Documents cités:
- DE-A- 3 921 127
- FR-A- 2 674 157
- US-A- 4 519 838
- PATENT ABSTRACTS OF JAPAN vol. 009, no. 235 (M-415)21 Septembre 1985 & JP-A-60 089 508
- PATENT ABSTRACTS OF JAPAN vol. 016, no. 081 (C-0915)27 Février 1992 & JP-A-32 71 115

## Description

La présente invention est relative à un nouveau procédé de fabrication d'alliages de zinc en vue d'obtenir une poudre homogène d'oxydes de zinc dopé.Ce procédé est relatif à la fabrication de pastilles par pressage à froid ou par frittage particulièrement en vue de constituer des semi-conducteurs ou des supra-conducteurs pour la réalisation de parafoudres ou d'éléments limiteurs de tension associés par exemple à un appareillage électrique ou électronique.

On sait que les éléments de ce genre sont généralement produits à partir d'oxydes pulvérulents ou granulaires constitués par un oxyde de zinc allié à des éléments dopants, en particulier formés par des oxydes de nickel, de chrome, de manganèse, de magnésium, de bismuth, d'antimoine, de silicium, de cobalt, etc.

Les procédés traditionnels de mise en oeuvre de matériaux céramiques consistent en général à peser les oxydes constitutifs, à les mélanger et à les broyer, puis à constituer un mélange en milieu aqueux pour obtenir une barbotine. Cette barbotine est ensuite frittée à haute température après mise en forme par pressage selon les règles de l'art du métier de céramiste. L'élément ainsi réalisé peut recevoir à ses extrémités des électrodes métalliques d'amenée de courant par dépôt d'une couche métallique par projection à la torche à plasma ou par tout autre procédé de dépôt. Le reste de la surface extérieure est en général revêtu de différentes couches de matériaux assurant l'isolation électrique, une protection physico-chimique et mécanique empêchant éventuellement le contournement électrique de l'élément. En particulier, on utilise des verres ou des céramiques compatibles avec l'oxyde, des résines de synthèse comme les résines époxy, des produits silicones et la plupart des produits isolants connus.

De tels procédés sont complexes à mettre en oeuvre et nécessitent des installations industrielles de grande taille comportant des broyeurs et des fours. De plus, il est nécessaire d'exercer des contrôles complexes sur les matières premières en vue d'assurer une bonne qualité et une bonne reproductibilité du produit final. En outre, l'homogénéité du produit obtenu laisse à désirer, car le mélange intime des éléments broyés ne peut jamais être parfait.

Les perfectionnements qui font l'objet de la présente invention visent à remédier à ces inconvénients et à permettre la réalisation d'un procédé de fabrication qui réponde mieux que jusqu'à présent aux désiderata de la pratique et qui assure en particulier l'obtention d'une poudre homogène d'oxydes d'oxyde de zinc dopé.

Suivant le procédé conforme à l'invention, les éléments de base pour l'obtention de la poudre destinée à la constitution des semi-conducteurs à base d'oxyde de zinc dopé ne sont plus des produits oxydés, mais des alliages ou mélanges de métaux qui sont ensuite oxydés soit en phase solide, soit en phase liquide, soit en phase vapeur.

Le procédé conforme à l'invention consiste essentiellement :
- à placer les différents métaux prévus pour constituer l'alliage dans un creuset ;
- à provoquer la fusion desdits métaux sous atmosphère neutre ou réductrice en assurant un brassage du liquide en vue de l'homogénéiser ;
- à récupérer l'alliage liquide ;
- à obtenir, à partir de l'alliage, une poudre de granulométrie déterminée dont chacune des particules est homogène ;
- à oxyder lesdites particules à l'aide d'un dispositif à lit fluidisé, le gaz réactif étant à une température comprise entre 400 et 700°C ;
- à compacter la poudre ainsi obtenue sous forme de pastilles ;
- et à fritter le produit à une température comprise entre 800°C et 1500°C.

Selon un premier mode de réalisation, l'étape de fusion des métaux sous atmosphère neutre ou réductrice est suivie des étapes suivantes :
- coulée de l'alliage liquide dans une lingotière dans ladite atmosphère neutre ou réductrice ;
- refroidissement du lingot obtenu ;
- et réduction de ce lingot ainsi solidifié en une poudre par broyage ou en copeaux par usinage.

On peut aussi fondre le lingot en un alliage liquide qui est pulvérisé en vue d'obtenir de fins éléments ou grains solides de composition homogène qui sont ensuite oxydés.

Selon un autre mode de réalisation du procédé l'étape de fusion des métaux sous atmosphère neutre ou réductrice est suivie des étapes suivantes :
- pulvérisation de l'alliage en fines gouttelettes à l'aide d'un gaz
- récupération des éléments sous forme de grains solides métalliques dans la partie inférieure du pulvérisateur
- oxydation des grains solides dans un dispositif à lit fluidisé.

Une fois la poudre obtenue, elle est compactée sous forme de pastilles par pressage à froid puis par frittage à haute température;

Le dessin annexé, donné à titre d'exemple, permettra de mieux comprendre l'invention, les caractéristiques qu'elle présente et les avantages qu'elle est susceptible de procurer:
Fig. 1 est une coupe d'un appareil expérimental destiné à la mise en oeuvre d'un certain nombre de phases du premier mode de réalisation du procédé suivant l'invention.
Fig. 2 est une coupe d'un second appareil expérimental destiné à la réalisation des dernières phases du premier mode de réalisation du procédé suivant l'invention.
Fig. 3 est une coupe d'un dispositif pilote de fabrication permettant d'obtenir des grains d'oxydes selon le second mode de réalisation du procédé suivant l'invention
Fig. 4 est une coupe d'un réacteur aéraulique à lit fluidisé de type statique.

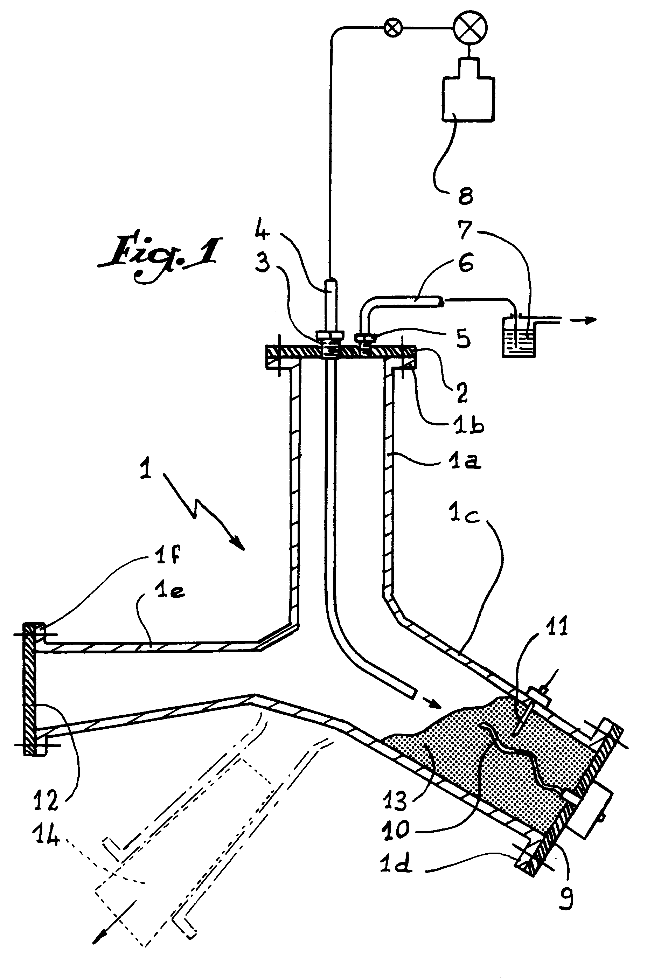

L'appareil expérimental illustré en fig. 1 est constitué par un four à trois branches réalisé en une matière réfractaire ou métallique telle que de l'acier inoxydable et qui a été affecté de la référence générale 1. Le four 1 comporte une première branche verticale 1a, dont l'extrémité libre comporte une bride 1b à laquelle est associé, de manière étanche, un premier obturateur 2. Ce dernier est traversé par un raccord 3 servant de passage étanche à une tubulure 4 d'amenée d'hydrogène ou d'un gaz neutre dans le four 1.

Un second raccord 5, traversant l'obturateur 2, est associé à un tuyau 6 aboutissant à l'extérieur à un barboteur 7. L'origine de la tubulure 4 est branchée à un réservoir 8 contenant par exemple de l'hydrogène, tandis que la partie interne de cette tubulure débouche dans la seconde branche 1c du four 1 qui est orientée obliquement par rapport à la branche 1a. Le débouché de la branche 1c qui comporte aussi une bride 1d est fermé hermétiquement par un second obturateur 9. On observe que l'obturateur 9 est associé à un agitateur 10 représenté très schématiquement;une sonde thermo-électrique 11 est installée dans la branche 1c pour des raisons que l'on expliquera mieux plus loin.

La troisième branche 1e du four 1 qui est orientée horizontalement est prévue tronconique avec ouverture en direction de son extrémité libre qui comporte une bride 1f à laquelle est assemblé de mère étanche un fond 12.

Le four 1 est utilisé pour réaliser un lingot en opérant de la manière suivante : l'obturateur 2 étant démonté, on introduit dans le four 1 les différents métaux que l'on désire mélanger à chaud en vue d'obtenir un alliage homogène. Les différents fragments métalliques viennent se loger dans la branche 1c.L'obturateur 2 est ensuite remis en place et la tubulure 4 et le tuyau 6 raccordés convenablement.La partie interne de la tubulure 4 est coudée de manière que son débouché se trouve à l'entrée de la branche 1c.

Puis cette dernière est portée à température suffisante pour provoquer la fusion des métaux qu'elle renferme, la température de fusion étant régulée par la sonde 11 et un appareil non représenté.

Une fois les métaux réduits en liquide, l'agitateur 10 est mis en mouvement pour homogénéiser l'ensemble. La fusion s'effectue par exemple sous atmosphère réductrice du fait que de l'hydrogène renfermé dans le réservoir 8 est insufflé dans le four 1, pour s'échapper par le tuyau 6.

Lorsque l'alliage en fusion est bien à température et parfaitement homogénéisé, le four est basculé dans le sens inverse de celui des aiguilles d'une montre de manière que l'alliage en fusion 13 s'écoule dans la branche 1e du four 1 qui constitue une lingotière. On arrête alors le chauffage de la branche 1c pour que l'alliage liquide contenu dans la lingotière 1e se refroidisse et forme un lingot 14 qui, une fois solidifié, est extrait de ladite lingotière après démontage du fond 12, comme cela est illustré en trait discontinu en fig. 1.

On notera que l'écoulement du liquide et le refroidissement du lingot s'effectuent sous atmosphère réductrice du fait que l'alimentation en hydrogène n'a pas été éliminée.

Une fois le lingot obtenu, on peut le placer sous atmosphère appropriée de manière à provoquer son oxydation et l'utiliser tel quel pour la réalisation d'un organe limiteur de tension tel qu'un parafoudre. On peut aussi broyer le lingot 14 pour le réduire en poudre ou l'usiner en copeaux et provoquer l'oxydation des grains de la poudre ou des copeaux qui sont ensuite compactés sous forme de pastilles par pressage à froid puis frittés par exemple à une température de 1300 °C pendant une heure.

Dans un mode d'exécution préféré, le lingot est fondu en un alliage liquide qui est pulvérisé en vue d'obtenir de fins éléments ou grains solides de composition homogène.

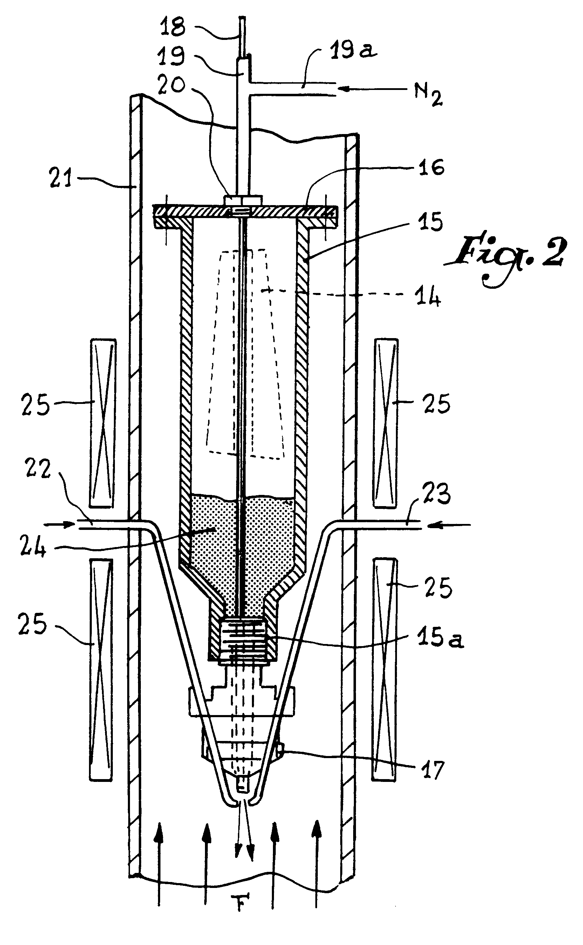

A cet effet, on utilise l'appareil illustré en fig. 2.

Celui-ci est un creuset cylindrique 15 dont l'ouverture supérieure est fermée hermétiquement par un obturateur 16, tandis que son extrémité inférieure présente une partie tronconique se terminant par une ouverture filetée 15a dans lequelle est vissée une buse 17 pouvant être obturée au moyen d'une aiguille 18 qui traverse l'ensemble de part en part.

A l'extérieur du creuset, l'aiguille 18 se trouve dans une canalisation 19 reliée de manière étanche à l'obturateur 16 par un raccord 20.

Un presse-étoupe, non représenté, est disposé entre l'aiguille 18 et la canalisation 19 qui comporte une dérivation 19a reliée à un réservoir contenant de l'azote sous pression.

Le creuset 15 est disposé dans un tube coaxial 21, dans lequel il est convenablement retenu par des moyens non représentés, tandis que deux tuyaux, 22, 23 pénètrent dans le tube 21 et traversent obliquement la buse 17, leurs débouchés se faisant face à l'avant du centre de la buse 17.

Le fonctionnement est le suivant :

Le lingot 14, préalablement percé axialement, est placé dans le four 15 après que l'on ait démonté l'aiguille 18 et l'obturateur 16. Ce dernier est remis en place et l'aiguille 18 est engagée dans le tuyau 19 pour obturer l'ouverture de la buse 17 en traversant le lingot 14.

Grâce à un chauffage approprié, le lingot est fondu pour former un alliage liquide 24. L'aiguille 18 est ensuite retirée pour ouvrir la buse 17 et de l'azote est injecté à l'intérieur du four pour mettre l'alliage en fusion 24 sous pression afin qu'il s'écoule goutte à goutte par l'ouverture de la buse 17. Les tuyaux 22 et 23 sont alimentés en air chaud éventuellement humide ou autre gaz oxydant, de telle sorte que les gouttes d'alliage 24 en fusion sont pulvérisées en fines particules qui sont en même temps partiellement oxydées et tombent à l'état froid à l'extrémité inférieure du tube 21.

La température du gaz oxydant envoyé par les tuyaux 22 et 23 est telle que l'oxydation des particules pulvérisées soit possible thermodynamiquement.

Bien entendu, la matière constituant le tube 21 ne se dégrade pas sous l'effet de la chaleur. A cet effet, le creuset 15 et le tube 21 peuvent être réalisés en une matière réfractaire ou métallique telle que de l'acier inoxydable qui ne réagit pas avec l'alliage en fusion.

L'oxydation peut être accélérée en envoyant à contre-courant dans le tube 21 un flux d'air chaud F chargé ou non de vapeur d'eau ou d'oxygène ou de tout autre additif favorisant l'oxydation. Grâce au tube 21 convenablement chauffé par des résistances 25 ou par tout autre moyen, on peut obtenir des températures de l'ordre de 1000°C favorisant l'obtention plus rapide des mélanges d'oxydes.

Si l'alliage en fusion au sortir de la buse 17 est pulvérisé par un gaz réducteur ou neutre, les fines particules ou gouttelettes d'alliage sont alors refroidies et conservées à l'état métallique non oxydé. Un abandon dans un milieu oxydant comme par exemple un four à effet Joule ou un four à contre-courant d'agents oyxdants permet l'oxydation.

On notera que la température de pulvérisation s'effectue entre 600 et 900°C tandis que, si l'oxydation s'effectue en phase solide, elle peut avoir lieu entre 400 et 900°C et préférablement entre 600 et 900°C pour permettre les premières réactions entre oxydes.

En ce qui concerne l'oxydation des gouttelettes d'alliage à l'état métallique, elle peut être effectuée à une température comprise entre 600°C et 1000°C.

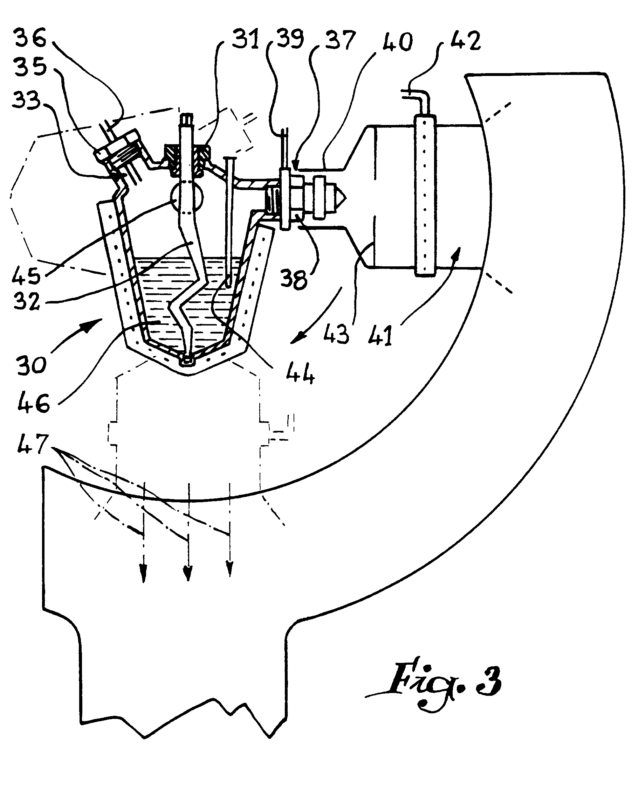

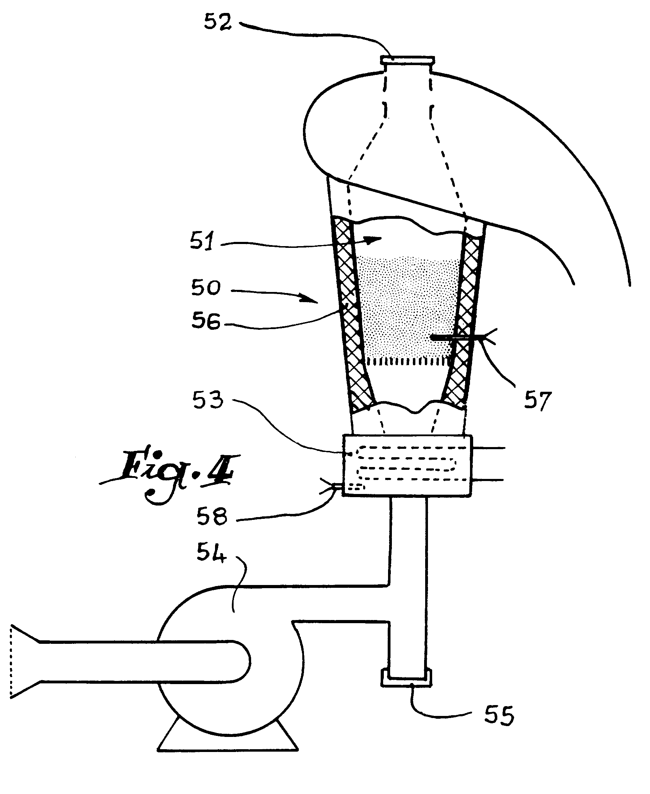

Dans un autre mode de réalisation qui sera décrit plus loin plus précisément en référence au dispositif représenté aux figures 3 et 4, les métaux choisis sont placés dans un creuset, situé à la partie supérieure d'un appareil d'atomisation.

On provoque la fusion de l'alliage en assurant un brassage du liquide pour l'homogénéiser. Cette opération peut être effectuée par exemple dans un four à effet Joule. Le brassage de l'alliage en fusion peut alors être assuré mécaniquement par exemple à l'aide d'un agitateur que l'on met en mouvement ou encore d'un dispositif de vibration ou de déplacement du creuset.

On peut également utiliser un four à haute fréquence qui assure d'une part la fusion de l'alliage et d'autre part l'homogénéisation à l'aide du champ électromagnétique induit.

Ces opérations sont effectuées sous atmosphère neutre ou réductrice, en particulier afin d'éviter une oxydation de l'un ou de plusieurs constituants de l'alliage.

Dans le cas d'une oxydation sélective, les produits formés seraient alors expulsés dans les crasses du mélange, provoquant une variation de la composition de l'alliage.

Ce phénomène se produit en particulier lorsque l'on prépare une faible quantité d'alliage. Un balayage d'argon, d'hydrogène ou de tout autre gaz ne favorisant pas l'oxydation permet de conserver les constituants à l'état métallique. Pour la préparation d'une grande quantité d'alliage, il est possible d'effectuer un balayage du dispositif à l'air, en utilisant par exemple un sel fondant, en particulier du chlorure de sodium ou du borax comme écran chimique disposé sur le bain liquide. Cet ajout n'est conseillé que dans la mesure où la quantité de crasse est importante.

L'opération de fusion s'effectue à une température comprise entre 400 et 600°C.

L'alliage fondu est ensuite atomisé en fines gouttelettes.

Le gaz nécessaire à l'atomisation peut être un gaz ne favorisant pas l'oxydation, en particulier de l'argon ou de l'azote. Les particules obtenues sont alors des poudres à l'état métallique.

Il est également possible d'utiliser d'autres types de gaz, en particulier des gaz réactifs, de manière à transformer les gouttes d'alliages en carbure, nitrure, borure ou toute autre forme dérivée du mélange métallique.

Pour former des poudres de mélange d'oxydes, on utilise un gaz oxydant comme par exemple de l'oxygène ou de l'air chargé d'humidité, ou tout autre produit favorisant l'oxydation de la goutte d'alliage tel qu'un mélange CO / CO2.

Les particules sous forme de grains solides métalliques ou partiellement transformés en toute autre forme dérivée de l'état métallique sont récupérées dans la partie inférieure de l'atomiseur. Ils subissent alors un traitement chimique et thermique à l'aide d'un dispositif à lit fluidisé tel qu'un traitement d'oxydation en utilisant par exemple de l'air comme gaz de sustentation. Le dispositif prévoit également de récupérer des grains solides métalliques qui ne subiront pas de traitement chimique au sein du lit fluidisé.Les particules sont alors collectées soit dès la sortie de l'appareillage d'atomisation soit après passage dans le lit en utilisant comme gaz de sustentation, un gaz neutre ou réducteur.

Plusieurs types de lits fluidisés permettent une transformation rapide et totale de l'alliage de départ.

Selon un premier mode de réalisation, le lit peut être de type statique. La poudre d'alliage demeure alors en sustentation à l'aide d'un gaz porteur réactif vis-à-vis de l'alliage. On peut par exemple utiliser de l'air chaud ou tout autre gaz favorisant l'oxydation des particules d'alliage introduites dans le lit fluidisé.

La poudre n'est alors expulsée du lit que lorsque le traitement a fait totalement son oeuvre.

L'ensemble de ce dispositif est porté à une température t°C qui permet la transformation rapide des particules. La choix de la valeur de la t°C est motivé par les faits suivants :
- les éléments constitutifs doivent être thermodynamiquement oxydables à la t°C considérée ;
- il est primordial de conserver les particules sous la forme de grains,en évitant toute agglomération de la poudre ;
- il faut empêcher la dégradation des matériaux constitutifs du lit;
- il faut conserver l'homogénéité du matériau. La t°C du gaz réactif doit done être comprise entre 400 et 700°C.

En effet, à partir de 400°C, la vitesse d'oxydation des poudres devient non négligeable et augmente rapidement lorsque la t°C du lit s'élève.

Mais, à partir de 700°C, la pression de vapeur de zinc devient forte et engendre une réaction du zinc gazeux avec l'oxygène à la surface des grains. Une poudre de couleur blanche s'accumule, et ce changement de mécanisme d'oxydation provoque une détitration du coeur des particules d'alliages.

Ce phénomène a d'autant plus de risque de se produire que la t°C est plus élevée et que l'oxydation est à son stade primitif. En effet, la couche d'oxyde enrobant les particules d'alliage est encore trop fine et ne peut empêcher le départ de vapeur de zinc jusqu'à sa surface. Puis, au fur et à mesure que le traitement se produit, la couche d'oxyde protectrice s'épaissit et empêche tout changement de mécanisme d'oxydation. On obtient ainsi des grains composés de mélange des oxydes des éléments constitutifs de l'alliage. Par contre, il est possible d'augmenter cette t°C lorsque les particules sont partiellement oxydées. Cette opération peut par exemple être effectuée à l'aide d'un programmateur.

Selon un autre mode de réalisation, le lit fluidisé peut être de type mobile.

Au fur et à mesure que l'oxydation se poursuit, les fines particules sont déplacées dans le lit de manière à obtenir continuellement de la poudre totalement transformée à la sortie du lit.

Ceci peut par exemple être réalisé à l'aide d'un tapis présentant un coussin de gaz réactif ou encore d'un tube à l'intérieur duquel le courant gazeux permet le déplacement et la réaction chimique des particules. La t°C du lit peut demeurer constante, mais il est aussi possible d'appliquer un gradient de t°C positif, au fur et à mesure que les particules se déplacent. L'application de ce gradient permet d'effectuer une oxydation de l'alliage en dynamique de t°C engendrant une vitesse globale de réaction beaucoup plus élevée que lorsque la t°C reste constante au sein du lit. De plus, la poudre qui s'oxyde atteint des t°C élevées permettant ainsi aux premières réactions entre les oxydes présents de s'établir, par exemple dans le cas de la fabrication d'une céramique.La phase pyrochlore obtenue dès la fin du traitement d'oxydation engendre une réduction de la durée des traitements thermiques ultérieurs nécessaires à la constitution d'une céramique.

Un mode de couplage possible est représenté aux figures 3 et 4. le procédé peut s'appliquer à tout type de métaux ou d'alliages susceptibles de s'oxyder.

L'appareil représenté à la figure 3 est constitué d'un four cylindrique 30 dont l'ouverture supérieure est fermée hermétiquement par un premier obturateur 31 associée à un agitateur 32.

Le four 30 comporte une ouverture latérale 33, orientée obliquement, prévue pour le chargement ; cette ouverture est fermée hermétiquement par un deuxième obturateur 35 traversé par une tubulure 36 dont l'origine est branchée à un réservoir d'azote (non représenté)

Le four comporte également une ouverture 37, orientée horizontalement, prévue pour le déchargement. Cette ouverture est fermée hermétiquement par un troisième obturateur 38 équipé d'un ajutage 39 prévu pour l'amenée d'un gaz propulseur. L'obturateur 38 est vissé dans une buse d'atomisation 40 qui aboutit dans la chambre 41 dans laquelle débouchent des ajutages d'eau pressurisée, désignés par la référence générale 42 ; un diaphragme métallique de protection est prévu en 43.

Une sonde thermo-électrique 44 est montée à l'intérieur du four 30.

Le four 30 peut être basculé autour de l'axe 45 dans les positions représentées en traits pleins et en traits discontinus,comme il sera expliqué par la suite.

Le protocole de mise en oeuvre est le suivant :

Dans la position représentée en traits pleins sur la fig. 3, les constituants métalliques (par exemple Zn, Bi, Sb...) sous forme de poudre de grenailles sont introduits par l'orifice 33. On introduit par la tubulure 36 de l'azote afin d'assurer un balayage d'azote à faible débit p.ex. 30 ml/mn au dessus du mélange.

Le four 30 est alors mis en fonctionnement. La t°C du bain est contrôlée par l'intermédiaire de la sonde 44 et l'homogénéisation de l'alliage en fusion 46 est assurée par l'agitateur 32.

On effectue ensuite l'atomisation de l'alliage comme suit:

Le gaz propulseur, qui peut être de l'air comprimé chauffé à 600°C, est mis en fonctionnement par l'intermédiaire de l'ajutage 39 ; le brouillard aqueux est déclenché sur les arrivées 42.

Après vérification des t°C et des débits des fluides, l'atomiseur est basculé dans le sens des aiguilles d'une montre, dans la position représentée en traits discontinus. La poudre 47 d'alliage fabriquée est récupérée après séparation du fluide refroidissant, en l'occurence l'eau.

On procède ensuite à l'oxydation de la poudre d'alliage. Cette oxydation est effectuée dans un réacteur aéraulique à lit fluidisé de type statique tel que représenté à la figure 4.

Ce réacteur est affecté de la référence générale 50. Il est essentiellement constitué d'une chambre 51 fermée hermétiquement à sa partie supérieure par un bouchon 52 prévu pour le chargement. Son extrémité inférieure présente une partie tronconique reliée, par l'intermédiaire d'un échangeur thermique 53 à une turbine à air 54, à débit réglable programmable. Une purge est prévue en 55.

La chambre 51 comporte une isolation thermique 56 et est équipée d'une sonde thermo-électrique 57.

Une autre sonde thermo-électrique 58 est placée dans l'échangeur thermique 53.

La sortie de l'oxyde pulvérulent est prévue en 55.

La poudre métallique 47 est chargée par l'orifice 52 ; la turbine 54 est mise en fonctionnement, son débit étant réglé de façon à maintenir la poudre en suspension dans le réacteur. La température de la réaction peut atteindre 600°C ; elle est réglée par la sonde 57 ainsi que par la sonde 58 de l'échangeur thermique 53.

En fait, cette t°C peut être comprise entre 400 et 700°C comme mentionné précédemment. Il est également possible d'appliquer un programme de t°C à partir du moment où le traitement d'oxydation se trouve à un stade avancé. De manière à éviter toute variation dans le mécanisme d'oxydation, la vitesse de montée en t°C ne doit toutefois pas être trop importante.

Les conditions de fonctionnement (débit de gaz, t°C) sont programmées et maintenues durant un temps approprié de façon à conduire à l'oxydation totale de la charge.

Au terme de la réaction, la turbine 54 change automatiquement de débit et expulse l'oxyde pulvérulent hors du réacteur.

Il faut remarquer que, quelque soit le type de lit fluidisé employé, c'est la composition chimique du gaz de sustentation qui conditionne la nature de la poudre obtenue.

La composition de l'air chaud peut subir des modifications ; le gaz peut par exemple être enrichi en oxygène, par un mélange CO / CO2 ou par tout autre produit d'addition de manière à augmenter les vitesses d'oxydation des éléments de l'alliage comme par exemple de la vapeur d'eau, du chlore ou tout autre produit réactif. L'air chaud peut être remplacé par un autre gaz de sustentation tel que l'oxygène.

La poudre obtenue est ensuite compactée sous forme de pastilles par pressage à froid ou tout autre moyen, en utilisant par exemple un liant organique ou minéral tel que l'eau.

On peut aussi fritter les particules à haute température, de l'ordre de 1300°C, pendant une heure pour obtenir la densification de la matière sous forme de pastilles.

## Revendications

1. Procédé de fabrication de semi-conducteurs à base d'oxyde de zinc dopé obtenu à partir d'alliages métalliques consistant,
- à placer les différents métaux prévus pour constituer l'alliage dans un creuset (1c, 8) ;
- à provoquer la fusion desdits métaux sous atmosphère neutre ou réductrice en assurant un brassage du liquide en vue de l'homogénéiser ;
- à récupérer l'alliage liquide ;
- à obtenir, à partir de l'alliage, une poudre de granulométrie déterminée dont chacune des particules est homogène
- à oxyder lesdites particules à l'aide d'un dispositif à lit fluidisé, le gaz réactif étant à une température comprise entre 400 et 700°C ;
- à compacter la poudre ainsi obtenue sous forme de pastilles
- et à fritter le produit à une température comprise entre 800°C et 1500°C.

2. Procédé selon la revendication 1, selon lequel la poudre de granulométrie déterminée dont chacune des particules est homogène est obtenue par coulée de l'alliage liquide dans une lingotière (1c) dans ladite atmosphère neutre ou réductrice, suivie d'un refroidissement du lingot (14) obtenu et d'une réduction du lingot ainsi solidifié en une poudre par brovage ou en copeaux par usinage.

3. Procédé selon la revendication 1, selon lequel la poudre de granulométrie déterminée dont chacune des particules est homogène est obtenue par coulée de l'alliage liquide dans une lingotière (1c) dans ladite atmosphère neutre ou réductrice suivi d'une fusion du lingot (14) en un alliage liquide qui est pulvérisé en fines gouttelettes en vue d'obtenir de fins éléments ou grains solides de composition homogène.

4. Procédé selon la revendication 3, selon lequel les éléments ou grains sont oxydés pendant la pulvérisation sous un courant d'air humide.

5. Procédé selon l'une des revendications 2 ou 4, caractérisé en ce que l'oxydation des particules s'effectue en phase solide

6. Procédé suivant la revendication 4, caractérisé en ce que la pulvérisation s'effectue sous un courant de gaz réducteur ou neutre

7. Procédé suivant la revendication 1, caractérisé en ce que l'étape de fusion des métaux sous atmosphère neutre ou réductrice est suivie des étapes suivantes :
- pulvérisation de l'alliage en fines gouttelettes à l'aide d'un gaz
- récupération des éléments sous forme de grains solides métalliques dans la partie inférieure du pulvérisateur
- oxydation des grains solides dans le dispositif à lit fluidisé
- compactage sous forme de pastilles
- frittage

8. Procédé selon l'une des revendications 1 et 7, caractérisé en ce que la fusion est provoquée sous atmosphère neutre ou réductrice ou même à l'air en utilisant un sel fondant tel que le chlorure de sodium ou le borax.

9. Procédé suivant la revendication 7, caractérisé en ce que le gaz de pulvérisation est un gaz ne favorisant pas l'oxydation tel que l'argon ou l'azote.

10. Procédé suivant la revendication 7, caractérisé en ce que le gaz de pulvérisation est un gaz oxydant tel que l'oxygène ou de l'air chargé ou non d'humidité.

11. Procédé selon les revendications 7 et 9, selon lequel la sustentation des particules d'alliage à oxyder dans le lit fluidisé est réalisée par un gaz oxydant choisi parmi l'air, l'oxygène et l'air humide.

12. Procédé suivant la revendication 7, caractérisé en ce que le lit fluidisé est de type discontinu et que l'appareil est approvisionné en poudre d'alliage puis partiellement déchargé des particules déjà totalement oxydées.

13. Procédé suivant l'une quelconque des revendications 7, 11 et 12, caractérisé en ce que l'on applique au sein du lit fluidisé un gradient de température, cette température étant toujours comprise entre 400 et 700°C.

## Claims

1. A method for the production of semiconductors on the basis of doped zinc oxide obtained from metal alloys, consisting in
- placing the different metals intended to form the alloy in a crucible (1c, 8);
- causing the melting of said metals under a neutral or reducing atmosphere, effecting stirring of the liquid in order to homogenise it;
- recovering the molten alloy;
- obtaining from the alloy a powder of given grain size, each of the particles of which is homogenous;
- oxidising said particles by means of a fluidisedbed device, the reactive gas being at a temperature of between 400 and 700°C;
- compacting the powder thus obtained in the form of pellets;
- and sintering the product at a temperature of between 800°C and 1500°C.

2. A method according to Claim 1, in which the powder of a given grain size, each of the particles of which is homogenous, is obtained by pouring the molten alloy into an ingot mould (1c) in said neutral or reducing atmosphere, followed by cooling of the ingot (14) obtained and reduction of the ingot thus solidified into a powder by crushing or into chips by machining.

3. A method according to Claim 1, in which the powder of a given grain size, each of the particles of which is homogenous, is obtained by pouring the molten alloy into an ingot mould (1c) in said neutral or reducing atmosphere, followed by melting of the ingot (14) into a liquid alloy which is atomised into fine droplets in order to obtain fine elements or solid grains of homogenous composition.

4. A method according to Claim 3, in which the elements or grains are oxidised during atomisation in a current of humid air.

5. A method according to one of Claims 2 or 4, characterised in that the oxidation of the particles is effected in the solid phase.

6. A method according to Claim 4, characterised in that the atomisation is effected in a current of reducing or neutral gas.

7. A method according to Claim 1, characterised in that the melting stage of the metals in a neutral or reducing atmosphere is followed by the following stages:
- atomisation of the alloy into fine droplets with the aid of a gas,
- recovery of the elements in the form of solid metal grains in the lower part of the atomiser,
- oxidation of the solid grains in the fluidised-bed device,
- compacting in the form of pellets,
- sintering.

8. A method according to one of Claims 1 and 7, characterised in that the melting is effected under a neutral or reducing atmosphere or even in air, using a melting salt such as sodium chloride or borax.

9. A method according to Claim 7, characterised in that the atomising gas is a gas which does not promote oxidation, such as argon or nitrogen.

10. A method according to Claim 7, characterised in that the atomising gas is an oxidising gas such as oxygen or air, laden or not with humidity.

11. A method according to Claims 7 and 9, in which the lift of the particles of alloy to be oxidised in the fluidised bed is effected by an oxidising gas selected from among air, oxygen and humid air.

12. A method according to Claim 7, characterised in that the fluidised bed is of the discontinuous type and that the apparatus is supplied with alloy powder and then partially unloaded of the particles which have already been completely oxidised.

13. A method according to any one of Claims 7, 11 and 12, characterised in that a temperature gradient is applied in the heart of the fluidised bed, this temperature always being between 400 and 700°C.

## Patentansprüche

1. Verfahren zur Herstellung von Halbleitern auf der Basis von dotiertem Zinkoxid, gewonnen aus metallischen Legierungen; darin bestehend,
- daß verschiedene, für die Legierung vorgesehene Metalle in einen Tiegel (1c, 8) eingebracht werden;
- daß besagte Metalle in neutraler oder reduzierender Atmosphäre verschmolzen, sowie durch Verrühren der Flüssigkeit homogenisiert werden;
- daß die flüssige Legierung zurückgewonnen wird;
- daß aus der Legierung ein Pulver bestimmten Körnungsaufbaus gewonnen wird, bei dem jedes Teilchen homogen ist;
- daß besagte Teilchen mit Hilfe eines Fliessbettes oxidiert werden, wobei das Reaktionsgas eine Temperatur zwischen 400 und 700° C aufweist;
- daß das so gewonnene Pulver in Pastillenform verfestigt wird, und
- daß das Produkt bei einer Temperatur zwischen 800 °C und 1500 °C gesintert wird.

2. Verfahren nach Anspruch 1, bei dem das Pulver mit bestimmten Kornaufbau und mit jeweils homogenen Teilchen durch Ausgiessen der flüssigen Legierung in eine Ausgußpfanne (1c) in besagter neutraler oder reduzierender Atmosphäre erhalten wird, gefolgt von einem Abkühlen des erlangten Barrens (14) und einer Zerkleinerung des so verfestigten Barrens in ein Pulver durch Feinzerkleinerung oder maschinelle Zerspanung.

3. Verfahren nach Anspruch 1, bei dem das Pulver mit bestimmten Kornaufbau und mit jeweils homogenen Partikeln durch Ausfliessen der flüssigen Legierung in eine Ausgußpfanne (1c) in besagter neutralen oder reduzierenden Atmosphäre erhalten wird, gefolgt von einem Aufschmelzen des Barrens (14) zu einer flüssigen Legierung, die in feine Tröpfchen zerstäubt wird, zum Erlangen feiner Elemente oder fester Körnchen homogener Zusammensetzung.

4. Verfahren nach Anspruch 3, bei dem die Teile oder Teilchen während der Pulverisierung in einem Strom feuchter Luft oxidiert werden.

5. Verfahren nach einem der Ansprüche 2 oder 4, dadurch gekennzeichnet, daß die Oxidation der Teilchen in fester Phase erfolgt.

6. Verfahren nach Anspruch 4, dadurch gekennzeichnet, daß die Pulverisierung in einem Strom von reduzierendem oder neutralem Gas erfolgt.

7. Verfahren nach Anspruch 1, dadurch gekennzeichnet, daß dem Schritt des Aufschmelzens der Metalle in neutraler oder reduzierender Atmosphäre folgende Schritte folgen:
- Zerstäubung der Legierung in feine Tröpfchen mit Hilfe eines Gases;
- Rückgewinnung der Teile in Form von festen, metallischen Teilchen im unteren Teil des Pulverisators;
- Oxidation der festen Teilchen in einem Fliessbett;
- Verdichtung zu Pastillenform;
- Sintern.

8. Verfahren nach einem der Ansprüche 1 und 7, dadurch gekennzeichnet, daß das Schmelzen unter neutraler oder reduzierender Atmosphäre oder auch an der Luft unter Verwendung eines Schmelzsalzes wie Natriumchlorid oder Borax, erfolgt.

9. Verfahren nach Anspruch 7, dadurch gekennzeichnet, daß das für die Zerstäubung verwendete Gas ein nicht-oxidierendes Gas ist, wie Argon oder Stickstoff.

10. Verfahren nach Anspruch 7, dadurch gekennzeichnet, daß das für die Zerstäubung verwendete Gas ein oxidierendes Gas ist, wie Sauerstoff oder Luft, das feucht oder trocken sein kann.

11. Verfahren nach den Ansprüchen 7 und 9, bei dem das Oxidieren der Teilchen in dem Fliessbett dadurch aufrecht erhalten wird, dass als oxidierendes Gas ausgewählt wird zwischen Luft, Sauerstoff und feuchter Luft.

12. Verfahren nach Anspruch 7, dadurch gekennzeichnet, dass das Fliessbett ein diskontinuierliches ist, und dass die Vorrichtung mit Legierungspulver beschickt und dann teilweise von Teilchen befreit wird, die schon vollkommen oxidiert sind.

13. Verfahren nach einem der vorhergehenden Ansprüche 7, 11 und 12, dadurch gekennzeichnet, daß im Inneren des Fliessbettes ein Temperaturgefälle angewandt wird, bei dem die Temperatur immer zwischen 400 und 700°C liegt.
